# EUROPEAN PATENT APPLICATION

(11) **EP 4 570 627 A1**
(43) Date of publication of application: **18.06.2025**
(21) Application number: 24216796.3
(22) Date of filing: 02.12.2024
(51) Int. Cl.: B62D 21/15, B62D 25/02

(54) **LOWER VEHICLE-BODY STRUCTURE OF VEHICLE**

(30) Priority: 14.12.2023 JP 2023211513
(71) Applicant: MAZDA MOTOR CORPORATION, Hiroshima 730-8670 (JP)
(72) Inventor: Hirano, Hikari, Hiroshima, 730-8670 (JP); Miyamoto, Koji, Hiroshima, 730-8670 (JP); Iyoshi, Akira, Hiroshima, 730-8670 (JP); Kamemoto, Eiji, Hiroshima, 730-8670 (JP); Kuroda, Ippei, Hiroshima, 730-8670 (JP)
(74) Representative: Thoma, Michael

(57) **Abstract**

A lower vehicle-body structure of a vehicle (1) comprises an outer-side reinforcing member (13) and an inner-side reinforcing member (14) inside a side sill (2). In the side sill (2), upper-and-lower ridgelines (11f,11g) extending in a longitudinal direction are formed between an outer vertical-wall portion (11a) and an outer top-plate portion (11b) and between the outer vertical-wall portion (11a) and an outer bottom-plate portion (11c). The inner-side reinforcing member (14) comprises an engaged portion (15) fixed to an inner vertical-wall portion (12a) and configured to engage with the outer-side reinforcing member (13) in a vehicle side collision. The outer-side reinforcing member (13) comprises an engaging portion (18) configured to engage with the engaged portion (15) and at least one of an upper brace portion (17a) interconnecting the outer vertical-wall portion (11a) and the outer top-plate portion (11b), straddling the upper ridgeline (11f), and a lower brace portion (17b) interconnecting the outer vertical-wall portion (11a) and the outer bottom-plate portion (11c), straddling the lower ridgeline (11g).

## Description

### BACKGROUND OF THE INVENTION

The present invention relates to a vehicle and a lower vehicle-body structure of a vehicle.

Various technologies that when an obstacle, such as a pole, collides from a vehicle side, i.e., in a vehicle side collision, a side sill which constitutes a vehicle-side lower portion is so crashed that collision energy can be absorbed are known. In an electric automobile, in particular, since a battery pack is arranged below a floor of the vehicle, it is important from a protection perspective of the battery pack that the energy absorption performance of the side sill is improved properly.

In a structure disclosed in Japanese Patent Laid-Open Publication No. 2022-531463 (US 2022/0281304 A1), an outer-side reinforcing member and an inner-side reinforcing member are provided inside a closed-cross section of a side sill in order to improve an energy-absorption quantity of the side sill. In this structure, the outer-side reinforcing member is fixed to a vertical-wall portion of a side sill outer which is a vehicle-outside portion of the side sill. Likewise, the inner-side reinforcing member is fixed to a vertical-wall portion of a side sill inner which is a vehicle-inside portion of the side sill. The outer-side reinforcing member and the inner-side reinforcing member are configured to contact each other inside the closed-cross section of the side sill.

In the above-described structure, however, since the outer-side reinforcing member is fixed only to the vertical wall which is positioned on a vehicle inside of the side sill, an angle change of a ridgeline (corner portion) which is formed by the vertical-wall portion of the side sill outer and its upper-side horizontal wall (a top-plate portion) or by the vertical-wall portion of the side sill outer and its lower-side horizontal wall (a bottom-plate portion) cannot be suppressed in the vehicle side collision, so that there is a concern that the side sill outer may be deformed such that an angle between the vertical-wall portion and the horizontal wall is changed (opened or closed).

Accordingly, the outer-side reinforcing member is improperly shifted in a vertical direction in the vehicle side collision because of the angle change of the ridgeline of the side sill outer, so that it may be difficult that the outer-side reinforcing member engages with the inner-side reinforcing member stably. Consequently, improving the energy-absorption quantity by the outer-side reinforcing member and the inner-side reinforcing member may become difficult.

Further, according to the above-described structure, even in a normal vehicle traveling, since the angle change of the ridgeline positioned on the vehicle inside of the side sill cannot be suppressed only by the outer-side reinforcing member fixed to the vertical wall, it may be difficult to improve the rigidity of the side sill

Moreover, since the outer-side reinforcing member and the inner-side reinforcing member are configured to contact each other inside the closed-cross section of the side sill, there is a concern that a noise may be generated because the outer-side reinforcing member moves vertically according to the slight angle change of the side sill in the normal vehicle traveling.

### SUMMARY OF THE INVENTION

The present invention has been devised in view of the above-described matters, and an object of the present invention is to provide a lower vehicle-body structure of a vehicle which can compatibly attain improvement of the quantity of the energy absorption by the side sill in the vehicle side collision and improvement of the rigidity of the side sill in the normal vehicle traveling.

The lower vehicle-body structure of the vehicle of the present invention comprises a side sill having a closed-cross section and extending in a longitudinal direction of the vehicle, an outer-side reinforcing member arranged inside the side sill and extending in the longitudinal direction, and an inner-side reinforcing member arranged on a vehicle inside of the outer-side reinforcing member inside the side sill and extending in the longitudinal direction, wherein the side sill comprises an outer vertical-wall portion, an inner vertical-wall portion positioned on the vehicle inside of the outer vertical-wall portion, an outer top-plate portion connected to an upper end of the outer vertical-wall portion, and an outer bottom-plate portion connected to a lower end of outer vertical-wall portion, the outer vertical-wall portion, the inner vertical-wall portion, the outer top-plate portion and the outer bottom-plate portion form together at least part of the closed-cross section of the side sill, an upper ridgeline is formed between the outer vertical-wall portion and the outer top-plate portion and a lower ridgeling is formed between the outer vertical-wall portion and the outer bottom-plate portion, the inner-side reinforcing member comprises an engaged portion which is fixed to the inner vertical-wall portion and configured to engage with the outer-side reinforcing member when an collision load applied from a vehicle side is inputted to the side sill, and the outer-side reinforcing member comprises an engaging portion which is configured to engage with the engaged portion of the inner-side reinforcing member when the collision load applied from the vehicle side is inputted to the side sill and at least one of an upper brace portion which interconnects the outer vertical-wall portion and the outer top-plate portion, straddling the upper ridgeline, and a lower brace portion which interconnects the outer vertical-wall portion and the outer bottom-plate portion, straddling the lower ridgeline.

According to the present invention, the outer-side reinforcing member and the inner-side reinforcing member are provided inside the side sill. Further, the outer-side reinforcing member comprises the engaging portion which is configured to engage with the engaged portion of the inner-side reinforcing member in the vehicle side collision, i.e., when the collision load applied from the vehicle side is inputted to the side sill, and the brace portion. The brace portion interconnects the outer vertical-wall portion and the outer top-plate portion, straddling the ridgeline of the side sill, or interconnects the outer vertical-wall portion and the outer bottom-plate portion, straddling the ridgeline of the side sill.

According to the present invention, since the angle change of the ridgeline (e.g., the change of the angle of a corner portion of the closed-cross section such that the angle is opened or closed) is suppressed by the brace portion, the engaging portion of the outer-side reinforcing member is suppressed from being shifted in the vertical direction in the vehicle side collision. Accordingly, the engaging portion of the outer-side reinforcing member engages with the engaged portion of the inner-side reinforcing member more stably, so that the outer-side reinforcing member and the inner-side reinforcing member can be sufficiently compressed and deformed. Thereby, the energy-absorption quantity can be improved properly.

Further, since the angle change of the ridgeline can be suppressed by the brace portion in the normal vehicle traveling, the vehicle-body rigidity can be improved as well.

Moreover, even if the outer-side reinforcing member and the inner-side reinforcing member are provided inside the side sill in a state where they contact each other, since the slight angle change of the side sill is not generated in the normal vehicle traveling and also the vertical move of the outer-side reinforcing member according to this change does not occur. Consequently, the noise is not caused improperly.

In the above-described lower vehicle-body structure of the vehicle, it is preferable that one of the engaging portion and the engaged portion has a convex-shaped cross section and extends in the longitudinal direction and the other has a concave-shaped cross section, which corresponds to the convex-shaped cross section, and extends in the longitudinal direction.

According to this structure, the engaging portion and the engaged portion can stably engage with each other through their concave-and-convex portions (i.e., a groove and a protrusion) which extend in the longitudinal direction, respectively. Further, by roll-forming a metal plate, either one of the engaging portion and the engaged portion can be formed in a shape where it has the convex-shaped cross section and continuously extends in the longitudinal direction, and the other one can be formed in a shape where it has the concave-shaped cross section and continuously extends in the longitudinal direction. Thus, their stable engagement can be easily attained.

In the above-described lower vehicle-body structure of the vehicle, it is preferable that the outer-side reinforcing member includes a first portion which has the engaging portion and a second portion which is connected to the first portion and has the brace portion.

According to this structure, the first portion with the engaging portion and the second portion with the brace portion can be separately formed in their respective shapes having their desired and continuous cross sections through the respective roll-forming of the metal plates. Then, by connecting the first portion to the second portion, the outer-side reinforcing member provided with the engaging portion and the brace portion can be easily manufactured.

In the above-described lower vehicle-body structure of the vehicle, it is preferable that the first portion is fixed to the side sill via the second portion.

According to this structure, the collision load inputted to the side sill in the vehicle side collision can be securely transmitted to the first portion via the second portion at the outer-side reinforcing member. Thereby, the load transmission from the brace portion of the second portion to the engaging portion of the first portion can be attained smoothly.

In the above-described lower vehicle-body structure of the vehicle, it is preferable that the first portion comprises an upper wall portion which connects the engaging portion to the second portion and a lower wall portion which is located below the upper wall portion and connects the engaging portion to the second portion, and each of the upper wall portion and the lower wall portion has a deformation promotion to promote deformation partially in a vehicle side collision.

According to this structure, in the vehicle side collision, the engaging portion of the first portion of the outer-side reinforcing member engages with the engaged portion of the inner-side reinforcing member and also the partial deformation of the first portion of the outer-side reinforcing member is promoted at each of the deformation-promotion portions of the upper wall portion and the lower wall portion. Consequently, the energy-absorption quantity of the outer-side reinforcing member can be further improved.

In the above-described lower vehicle-body structure of the vehicle, it is preferable that the first portion is made of a plate member, and the deformation promotion portion is constituted by plural step portions which are formed by partially bending the plate member.

According to this structure, the deformation promotion portion can be formed at each of the upper wall portion and the lower wall portion of the first portion of the outer-side reinforcing member with a simple structure. In the vehicle side collision, the plural step portions are deformed in a folding manner (so-called bellows manner), so that the first portion of the outer-side reinforcing member can be deformed easily. Moreover, the energy-absorption quantity of the outer-side reinforcing member can be easily set and controlled by a shape of the step portion of the first portion.

In the above-described lower vehicle-body structure of the vehicle, it is preferable that the upper brace portion and the lower brace portion are both provided.

According to this structure, the further improvement of the energy-absorption quantity of the side sill in the vehicle side collision and the further improvement of the rigidity of the side sill in the normal vehicle traveling can be attained.

In the above-described lower vehicle-body structure of the vehicle, it is preferable that the outer vertical-wall portion has a bead extending in the longitudinal direction, and the brace portion is fixed to the bead.

According to this structure, since the outer vertical-wall portion of the side sill has the bead extending in the longitudinal direction, the rigidity of the outer vertical-wall portion can be improved. Further, since the brace portion is fixed to the bead which provides the high rigidity, the collision load of the vehicle side collision can be smoothly transmitted to the brace portion of the outer-side reinforcing member from the outer vertical-wall portion of the side sill outer, so that the energy-absorption quantity of the outer-side reinforcing member can be further improved.

In the above-described lower vehicle-body structure of the vehicle, it is preferable that the inner-side reinforcing member and the outer-side reinforcing member are made by roll-forming a metal plate.

According to this structure, the desired cross-section shape can be made easily and with low costs. Further, since the both reinforcing members are formed continuously, this structure is applicable to any vehicles with the different vehicle's entire length, i.e., applicable to any vehicle's body sizes.

Further, since the both reinforcing members made by the roll-forming reinforce the side sill over a long range in the longitudinal direction, even if an obstacle hits against any part, in the longitudinal direction, of the side sill, the superior energy-absorption quantity can be obtained.

In the above-described lower vehicle-body structure of the vehicle, it is preferable that the present lower vehicle-body structure of the vehicle further comprises a cross member extending in a vehicle width direction, wherein the cross member is connected to the inner vertical-wall portion of the side sill in a range which includes an overlapping portion of the inner-side reinforcing member and the side sill in a vertical direction.

According to this structure, the collision load can be effectively received in the vehicle side collision by the cross member which supports the overlapping portion of the inner-side reinforcing member and the side sill from the vehicle inside. Thereby, the energy-absorption quantity of the side sill and the inner-side reinforcing member can be further improved.

As described above, the lower vehicle-body structure of the vehicle of the present invention can compatibly attain the improvement of the quantity of the energy absorption by the side sill in the vehicle side collision and the improvement of the rigidity of the side sill in the normal vehicle traveling.

The present invention will become apparent from the following description which refers to the accompanying drawings.

### BRIEF DESCRIPTION OF THE DRAWINGS

FIG. **1** is a perspective view showing a whole structure of a vehicle body to which a lower vehicle-body structure of a vehicle according to an embodiment of the present invention is applied.
FIG. **2** is a left-side side view of the vehicle body of FIG. **1****.**
FIG. **3** is a sectional view taken along line III-III of FIG. **2****,** which shows an outer-side reinforcing member having an engaging portion with a large convex-shaped cross section and an inner-side reinforcing member having an engaged portion with a large concave-shaped cross section.
FIG. **4** is a sectional view of a modified example of the present invention, which comprises an outer-side reinforcing member having an engaging portion with a small convex-shaped cross section and an inner-side reinforcing member having an engaged portion with a small concave-shaped cross section.
FIG. **5** is a sectional view of another modified example of the present invention, which comprises an outer-side reinforcing member having an engaging portion with a small concave-shaped cross section and an inner-side reinforcing member having an engaged portion with a cross section having two small convex portions.
FIGS. **6A** - **6D** are explanatory sectional diagrams showing a crashing process of the present embodiment, in which a side sill and the outer-side reinforcing members and the inner-side reinforcing member, which are provided inside the side sill and shown in FIG. 3, are crashed in a vehicle side collision.
FIGS. **7A** - **7D** are explanatory sectional diagrams showing a crashing process of a comparative example, in which a side sill and an outer-side reinforcing member and an inner-side reinforcing member, which do not have an engaging portion and an engaged portion, are crashed in the vehicle side collision.
FIG. **8** is an explanatory sectional diagram showing welding points of two-sheet welding of the side sill and the outer-side reinforcing member and the inner-side reinforcing member according to the comparative example shown in FIGS. **7A - 7D****.**
FIG. **9** is an explanatory sectional diagram showing welding points of two-sheet welding and three-sheet welding of a side sill and an outer-side reinforcing member and an inner-side reinforcing member according to a conventional structure as another comparative example.

### DETAILED DESCRIPTION OF THE INVENTION

Hereafter, a lower vehicle-body structure of a vehicle according to an embodiment of the present invention will be described specifically referring to the drawings.

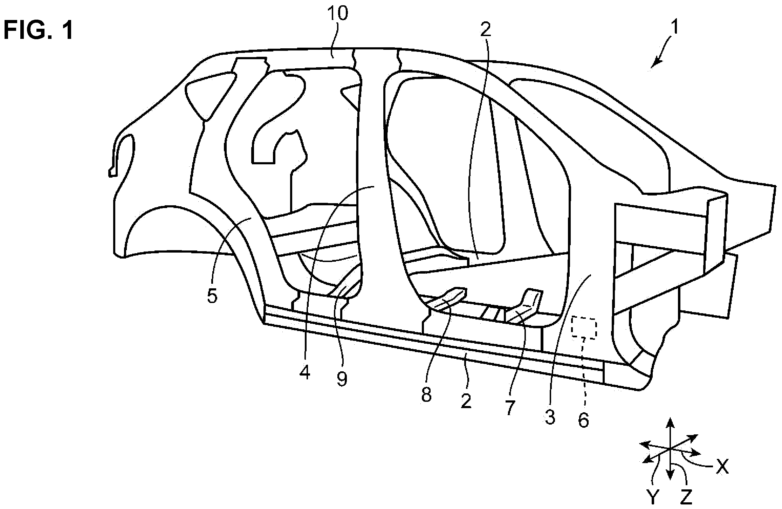

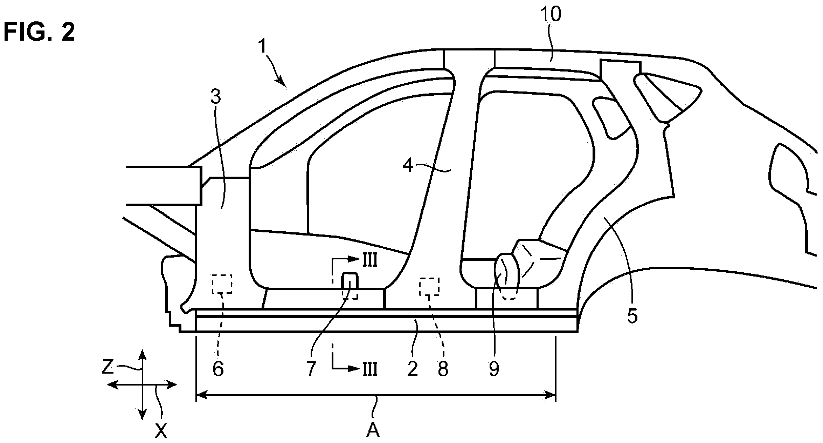

As shown in FIGS. **1** and **2****,** a vehicle body **1,** to which the lower vehicle-body structure of the vehicle according to the embodiment of the present invention is applied, comprises a side sill **2** which constitutes a lower side part of the vehicle body **1** at each of both sides, in a vehicle width direction Y, thereof. In the following figures, a longitudinal direction of the vehicle is shown by an arrow X, a vehicle width direction is shown by an arrow Y, and a vertical direction is shown by an arrow Z.

Specifically, the vehicle body **1** comprises a pair of side sills **2** extending in the vehicle longitudinal direction X, a front pillar **3** (A pillar) extending upward from each front-side end portion of the side sills **2,** a center pillar **4** (B pillar) extending upward at a middle position, in the longitudinal direction X, of each of the side sills **2,** a rear pillar **5** (C pillar) extending upward from around a rear-side end portion of each of the side sills **2,** a roof rail **10** extending in the longitudinal direction X and connecting each upper-end portion of the three pillars **3 - 5,** and four cross members **6** - **9** (a first cross member **6,** a front-side middle cross member **7,** a second cross member **8,** and a third cross member **9)** respectively extending in the vehicle width direction Y between the pair of side sills **2** and interconnecting the pair of side sills **2.**

Said pair of side sills 2 may extend along right and left bottom-side portions of a passenger compartment of the vehicle.

The side sill **2,** the three pillars **3 - 5,** and the roof rail **10** form a side part of a vehicle frame.

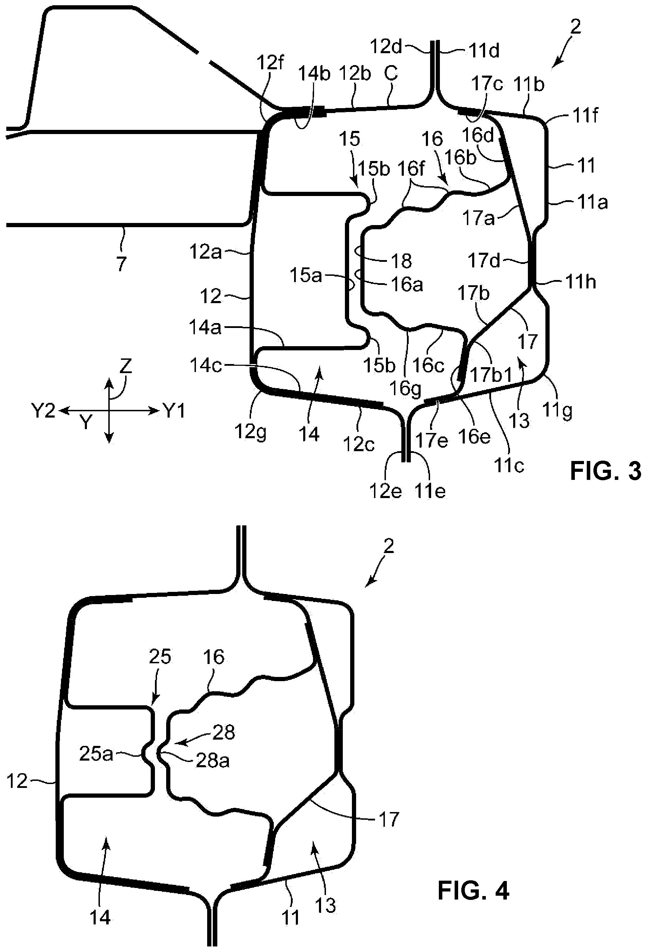

Further, the four cross members **6** - **9** are provided to be separated from each other in the longitudinal direction X. The four cross members **6** - **9** are respectively connected to an inner vertical-wall portion **12a** of each side sill inner part **12** of the side sills **2** in a range including an overlapping portion of an inner-side reinforcing member **14,** described later, and the side sill **2** in the vertical direction Z, like the front-side middle cross member **7** shown in FIG. **3****.** Further, the first cross member **6** and the second cross member **8** are connected to the side sill **2** in a range corresponding to respective connecting portions of the front pillar **3** and the center pillar **4** to the side sill **2.**

As shown in FIG. **3****,** two reinforcing members, i.e., an outer-side reinforcing member **13** and the inner-side reinforcing member **14** are fixed to an inner face of the side sill **2.** The outer-side reinforcing member **13** and the inner-side reinforcing member **14** are arranged inside the side sill **2** and extend in the longitudinal direction X, respectively. The inner-side reinforcing member **14** is arranged on a vehicle inside, i.e., on an inside Y2, in the vehicle width direction Y, of the outer-side reinforcing member **13.**

Hereafter, the side sill **2** and the outer-side reinforcing member **13** and the inner-side reinforcing member **14,** which are positioned inside of the side sill **2,** will be described specifically.

### (Description of Side Sill 2)

As shown in FIG. **3****,** the side sill **2** is a hollow cylindrical body extending in the longitudinal direction X of the vehicle. The side sill **2** is constituted by two members having a hat-shaped cross section, i.e., a side sill outer part **11** and a side sill inner part **12.** The side sill **2** has a substantially rectangular closed-cross section **C.** The side sill **2** is made by joining a pair of upper-and-lower flange portions **11d, 11e** of the side sill outer part **11** and a pair of upper-and-lower flange portions **12d, 12e** of the side sill inner part **12.**

The side sill outer part **11** comprises an outer vertical-wall portion **11a,** an outer top-plate portion **11b,** an outer bottom-plate portion **11c,** an upper flange portion **11d,** and a lower flange portion **11e.**

The outer vertical-wall portion **11a,** which is a flat plate-shaped portion facing outward in the vehicle width direction Y, extends in the vehicle longitudinal direction X. The outer top-plate portion **11b** is a flat plate-shaped portion which is connected to an upper end of the outer vertical-wall portion **11a** at its one end (an end portion on a vehicle outside Y1) and faces upward. The outer bottom-plate portion **11c** is a flat plate-shaped portion which is connected to a lower end of the outer vertical-wall portion **11a** at its one end (an end portion on the vehicle outside Y1) and faces downward. The outer top-plate portion **11b** and the outer bottom-plate portion **11c** extend substantially horizontally, respectively, and are slightly inclined toward a direction away from each other as they approach the side sill inner **12.**

The upper flange portion **11d** is a flat plate-shaped portion extending upward from the other end of the outer top-plate portion **11b** (an end portion positioned on a vehicle inside Y2). The lower flange portion **11e** is a flat plate-shaped portion extending downward from the other end of the outer bottom-plate portion **11c** (an end portion positioned on the vehicle inside Y2).

Ridgelines **11f, 11g** extending in the longitudinal direction X (i.e., corner portions of the closed-cross section **C** which are positioned on the vehicle outside Y1) are respectively formed between the outer vertical-wall portion **11a** and the outer top-plate portion **11b** and between the outer vertical-wall portion **11a** and the outer bottom-plate portion **11c.** That is, the ridgeline **11f** (in other words, the upper-side ridgeline **11f** or the first ridgeline **11f)** is formed between the outer vertical-wall portion **11a** and the outer top-plate portion **11b.** Meanwhile, the ridgeline **11g** (in other words, the lower-side ridgeline **11g** or the second ridgeline **11g)** is formed between the outer vertical-wall portion **11a** and the outer bottom-plate portion **11c,** and arranged below the ridgeline **11f.**

The outer vertical-wall portion **11a** has a bead **11h** extending in the longitudinal direction X (a recess portion which is recessed to the vehicle inside Y2 in FIG. **3****).**

The side sill inner **12** is arranged on the vehicle inside Y2 of the side sill outer **11.** The side sill inner **12** comprises an inner vertical-wall portion **12a,** an inner top-plate portion **12b,** an inner bottom-plate portion **12c,** an upper flange portion **12d,** and a lower flange portion **12e.**

The inner vertical-wall portion **12a** is a flat plate-shaped portion extending in the vehicle longitudinal direction X which is positioned on the vehicle inside of the outer vertical-wall portion **11a** and faces the vehicle outside Y1. The inner top-plate portion **12b** is a flat plate-shaped portion which is connected to an upper end of the inner vertical-wall portion **12a** at its one end (its end portion positioned on the vehicle inside Y2) and faces upward. The inner bottom-plate portion **12c** is a flat plate-shaped portion which is connected to a lower end of the inner vertical-wall portion **12a** at its one end (its end portion positioned on the vehicle inside Y2) and faces downward. The inner top-plate portion **12b** and the inner bottom-plate portion **12c** extend substantially horizontally, respectively, and are slightly inclined toward a direction away from each other as they approach the side sill outer **11.**

The upper flange portion **12d** is a flat plate-shaped portion which extends upward from the other end of the inner top-plate **12b** (its end portion positioned on the vehicle outside Y1). The lower flange portion **12e** is a flat plate-shaped portion which extends downward from the other end of the inner bottom-plate **12c** (its end portion positioned on the vehicle outside Y1).

Ridgelines **12f, 12g** extending in the longitudinal direction X (i.e., corner portions of the closed-cross section **C** which are positioned on the vehicle inside Y2) are respectively formed between the inner vertical-wall portion **12a** and the inner top-plate portion **12b** and between the inner vertical-wall portion **12a** and the inner bottom-plate portion **12e.**

The closed-cross section **C** of the side sill **2** is formed in a roughly rectangular shape by the above-described six flat plate-shaped portions, i.e., the outer vertical-wall portion **11a,** the inner vertical-wall portion **12a,** the outer top-plate portion **11b,** the outer bottom-plate portion **11c,** the inner top-plate portion **12b,** and the inner bottom-plate portion **12e.** Accordingly, the outer vertical-wall portion **11a,** the inner vertical-wall portion **12a,** the outer top-plate portion **11b,** and the outer bottom-plate portion **11c** form part of the closed-cross section **C.** Herein, in a case where the inner vertical-wall portion **12a** of the side sill inner **12** is so curved that it has a semicircular cross section, the inner top-plate portion **12b** and the inner bottom-plate portion **12c** may be unnecessary.

### (Descriptions of Outer-Side Reinforcing Member 13 and Inner-Side Reinforcing Member 14)

The inner-side reinforcing member **14** and the outer-side reinforcing member **13** which are shown in FIG. **3** are made by roll-forming a metal plate. This roll forming is a continuous forming process to make a member having a desired cross section by supplying a plate between a pair or plural-pairs of rollers and pressing it from its both faces.

The inner-side reinforcing member **14** shown in FIG. **3** is fixed to the inner vertical-wall portion **12a,** and has an engaged portion **15** with which an engaging portion **18** of the outer-side reinforcing member **13** engages when a collision load applied from the vehicle side is inputted to the side sill **2.** Herein, details of the engaged portion **15** will be described later.

The inner-side reinforcing member **14** has a hat-shaped cross section, and specifically, comprises a body portion **14a** which has a roughly U-letter shaped cross section with the engaged portion **15,** an upper flange portion **14b** which extends upward from an end portion of an upper wall portion of the body portion **14a** and is joined to the inner vertical-wall portion **12a** and the inner top-plate portion **12b,** and a lower flange portion **14c** which extends downward from an end portion of a lower wall portion of the body portion **14a** and are joined to the inner vertical-wall portion **12a** and the inner bottom-plate portion **12c** of the side sill inner **12.**

The upper flange portion **14b** and the lower flange portion **14c** of the inner-side reinforcing member **14** are joined to the inner vertical-wall portion **12a,** the inner top-plate portion **12b,** and the inner bottom-plate portion **12c** of the side sill inner **12** by spot welding or the like, respectively. Thereby, an angle change of the ridgelines **12f, 12g** (corner portions) of the side sill inner **12** can be suppressed.

It may be enough that the outer-side reinforcing member **13** includes the engaging portion **18** to engage with the engaged portion **15** of the inner-side reinforcing member **14** and brace portions **17a, 17b.**

Specifically, the outer-side reinforcing member **13** shown in FIG. **3** includes a first portion **16** which has the engaging portion **18** and a second portion **17** which is connected to the first portion **16** and has the brace portions **17a, 17b.** The first portion **16** and the second portion **17** are separately made through the roll-forming process of the metal plate, and then joined together by welding or the like. The first portion **16** is fixed to the side sill outer **11** via the second portion **17.**

Specifically, the first portion **16** comprises a tip-end face **16a** which extends in the vertical direction Z as a main part of the engaging portion **18,** an upper wall portion **16b** which connects an upper end of the tip-end face **16a** to the brace portions **17a, 17b** of the second portion **17,** and a lower wall portion **16c** which is positioned below the upper wall portion **16b** and connects a lower end of the tip-end face **16a** to the brace portions **17a, 17b** of the second portion **17.**

The upper wall portion **16b** and the lower wall portion **16c** have step portions **16f, 16g** as a deformation promotion portion to promote deformation partially in the vehicle side collision.

Since the first member **16** shown in FIG. **3** is made of the plate member, the deformation promotion portion is constituted by the plural step portions **16f, 16g** which are formed by partially bending (includes curving) the plate member in the example in FIG. **3****.** The step potions **16f, 16g** shown in FIG. **3** are beads or concave-convex portions (unevenness portions) which extend in the longitudinal direction X.

Hereafter, the engaging portion **18** and the engaged portion **15** will be described specifically.

### (Descriptions of Engaging Portion 18 and Engaged Portion 15)

The engaging portion **18** is configured to engage with the engaged portion **15** of the inner-side reinforcing member **14** when the collision load applied from the vehicle side is inputted to the side sill **2.** Herein, while the engaging portion **18** shown in FIG. **3** is separated from the engaged portion **15** before application of the collision load in the vehicle side collision, it may contact the engaged portion **15.**

The engaging portion **18** and the engaged portion **15** are preferably configured such that one of these has a convex-shaped cross section and extends in the longitudinal direction X and the other has a concave-shaped cross section which corresponds to the above-described convex-shaped cross section and extends in the longitudinal direction X.

For example, according to the engaging portion **18** and the engaged portion **15** of FIG. **3****,** the relatively large convex-shaped engaging portion **18** is formed by the tip-end face **16a** and respective connection portions of the upper wall portion **16b** and the lower wall portion **16c** to this tip-end face **16a** of the first portion **16** of the outer-side reinforcing member **13.** Meanwhile, the relatively large concave-shaped engaged portion **15** is formed by a tip-end portion **15a** and a pair of protrusions (projections) **15b** which protrude to the vehicle outside Y1 from upper-and-lower both ends of the tip-end portion **15a,** which corresponds to the engaging portion **18.**

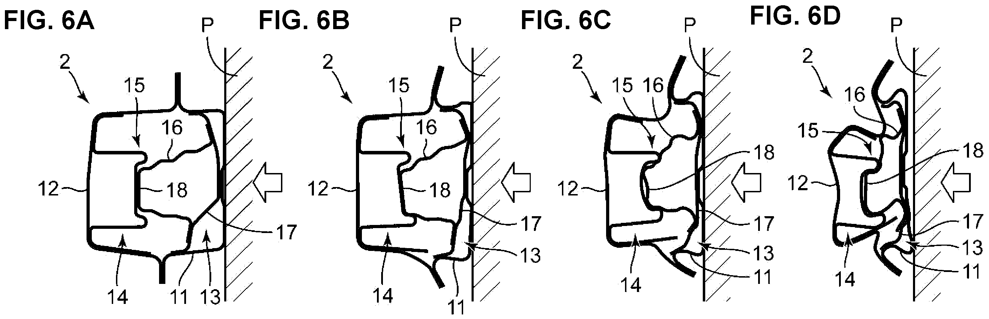

As shown in FIGS. **6A** - **6D****,** when the vehicle side collision happens and the collision load is inputted, the engaging portion **18** comes to engage with the engaged portion **15,** and the outer-side reinforcing member **13** and the inner-side reinforcing member **14** start to crash together. Herein, it can be expected that the engaging portion **18** may not improperly move downwardly, so that the inputted collision load can be received by the outer-side reinforcing member **13** and the inner-side reinforcing member **14** properly and stably in all directions (the vehicle width direction Y, the longitudinal direction X, the vertical direction Z, a torsional direction around an X axis extending in the longitudinal direction, and so on). Thereby, the side sill **2** can be suppressed from being bent and deformed to the vehicle inside Y2 in the vehicle side collision. Accordingly, in a vehicle structure in which a battery is loaded on the vehicle inside Y2 of the side sill **2,** this battery can be protected securely.

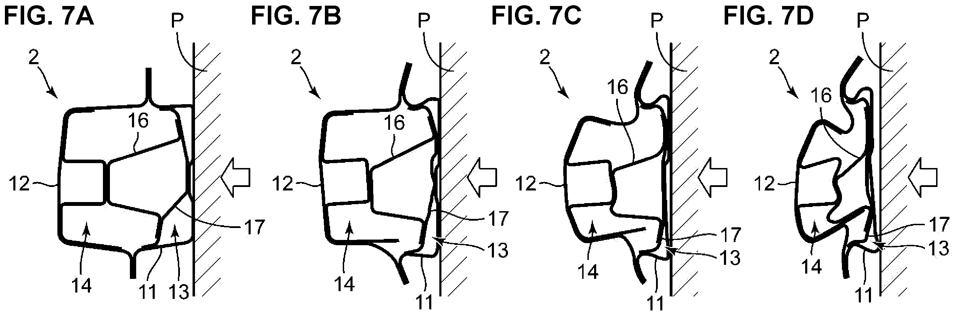

Meanwhile, in a case of a comparative example shown in FIGS. **7A** - **7D****,** in which the outer-side reinforcing member **13** and the inner-side reinforcing member **14** do not have any engaging portion and engaged portion, it is apparent that since the first portion **16** of the outer-side reinforcing member **13** is shifted (moved) downward, the collision load may not be stably received by the outer-side reinforcing member **13** and the inner-side reinforcing member **14.**

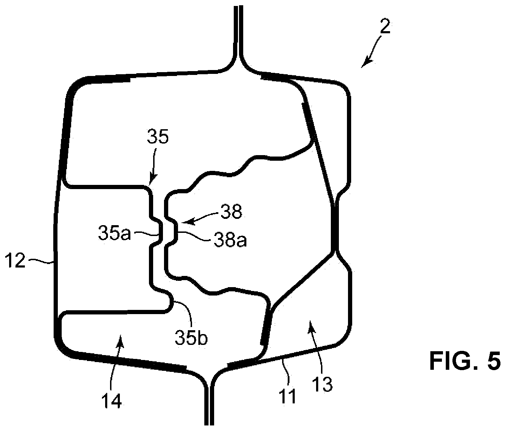

Herein, even in a case shown in FIG. **4** where an engaging portion **28** with a small convex portion **28a** and an engaged portion **25** with a small concave portion **25a** are combined, the above-described shifting between the outer-side reinforcing member **13** and the inner-side reinforcing member **14** can be suppressed by the concave-and-convex engaging. Further, even in another case shown in FIG. **5** where an engaging portion **38** with a small convex portion **38a** and an engaged portion **35** with a small concave portion **35a** capable of engaging with the concave portion **38a** and a lower convex portion **35b** to receive a lower corner portion of the engaged portion **38** are combined, the shifting between the outer-side reinforcing member **13** and the inner-side reinforcing member **14** can be suppressed by the concave-and-convex engaging as well. Moreover, even in another case of the engaging portions **28, 38** and the engaged portions **25, 35** which are combination of the small concave-and-convex shapes shown in FIGS. **4** and **5****,** since the outer-side reinforcing member **13** has the brace portions **17a, 17b** as shown in FIG. **3****,** the properly stable engaging can be attained.

The above-described engaging portions **18, 28, 38** and engaged portions **15, 25, 35** which have the concave-and-convex shaped cross section and extend in the longitudinal direction X shown in FIGS. **3 - 5** can be continuously formed easily by the roll-forming process of the metal plate.

Next, the second portion **17** with the brace portions **17a, 17b** will be described specifically.

### (Description of Second Portion 17 with Brace Portions 17a, 17b)

As shown in FIGS. **3****,** the second portion **17** is the member which is continuously formed by the roll-forming process of the metal plate, and has a curved shape or a V-letter shape with an obtuse angle as a whole. Specifically, the second portion **17** comprises a pair of upper-and-lower brace portions **17a, 17b** and three fixation plate portions **17c, 17d, 17e** (the upper-side fixation plate portion **17c,** the middle fixation plate portion **17d,** the lower-side fixation plate portion **17e)** which are separated from each other in the vertical direction Z.

The brace portions **17a, 17b** interconnect the outer vertical-wall portion **11a** and the outer top-plate portion **11b** and/or the outer vertical-wall portion **11a** and the outer bottom-plate portion **11c,** straddling the ridgelines **11f, 11g** (preferably, interconnect those linearly by welding). Herein, either one of these brace portions **17a, 17b** may be omitted.

In the present embodiment, the brace portions **17a, 17b** interconnect the outer vertical-wall portion **11a** and the outer top-plate portion **11b** and also the outer vertical-wall portion **11a** and the outer bottom-plate portion **11c,** straddling the ridgelines **11f, 11g.** The brace portions **17a, 17b** can suppress the angle change of the ridgelines **11f, 11g** of the side sill outer **11** in the vehicle side collision.

Herein, the angle change means that the angle of the ridgelines **11f, 11g** of the closed-cross section C of FIG. **3** is opened or closed, and, in some case, that the side sill outer is twisted around the X axis extending in the longitudinal direction X.

Specifically, the upper-side brace portion **17a** extends obliquely upward-and-inward (the vehicle inside Y2) so as to interconnect the outer top-plate portion **11b** and the outer vertical-wall portion **11a** of the side sill outer **11,** straddling the upper-side ridgeline **11f.** An upper end of the upper-side brace portion **17a** is connected to the upper-side fixation plate portion **17c.** The upper-side fixation plate portion **17c** is joined to the outer top-plate portion **11b** by welding or the like. A lower end of the upper-side brace portion **17a** is connected to the middle fixation plate portion **17d.** The middle fixation plate portion **17d** is joined to the bead **11h** extending in the longitudinal direction of the outer vertical-wall portion **11a** by welding or the like.

Further, the lower-side brace portion **17b** extends obliquely downward-and-inward (the vehicle inside Y2) so as to interconnect the outer bottom-plate portion **11c** and the outer vertical-wall portion **11a** of the side sill outer **11,** straddling the lower-side ridgeline **11g.** A lower end of the lower-side brace portion **17b** is connected to the lower-side fixation plate portion **17e.** The lower-side fixation plate portion **17e** is joined to the outer bottom-plate portion **11c** by welding or the like. An upper end of the lower-side brace portion **17b** is connected to the middle fixation plate portion **17d** joined to the bead **11h.**

Thus, the brace portions **17a, 17b** shown in FIG. **3** are fixed to the bead **11h** of the outer vertical-wall portion **11a** of the side sill outer **11** via the middle fixation plate portion **17d.**

### (Effects Verification of Brace Portions 17a, 17b)

Next, the verified effects of improvement of the torsional rigidity by means of the above-described brace portions **17a, 17b** will be described.

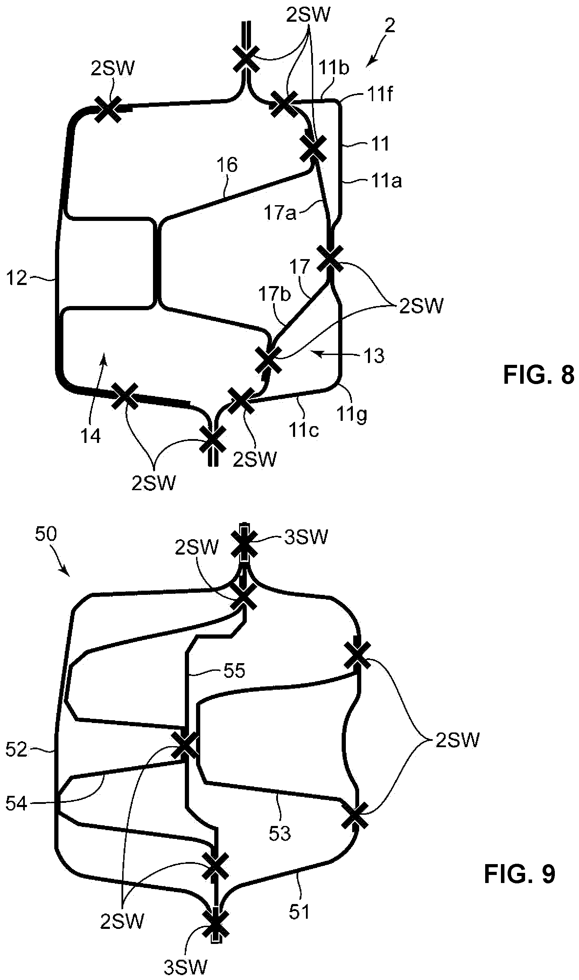

For the effects verification of the brace portions **17a, 17b,** a test model in which a pair of upper-and-lower brace portions **17a, 17b** shown in FIG. **8** are provided was considered. The model shown in FIG. **8****,** in which the outer-side reinforcing member **13** and the inner-side reinforcing member **14** have do not have any engaging portion nor engaged portion like the comparative example shown in FIG. **7****,** has a structure in which the second portion **17** of the outer-side reinforcing member **13** has a pair of upper-and-lower brace portions **17a, 17b.** The other structure is the same as that shown in FIG. **3****.** A reference character **2SW** shown in FIG. **8** shows points where two-sheet spot welding is applied.

Meanwhile, a conventional structure shown in FIG. **9** was considered as a comparative example for the above-described test model of FIG. **8****.** This conventional structure corresponds to the structure disclosed in the above-described patent document in which no brace portion is provided. In the structure shown in FIG. **9****,** an outer-side reinforcing member **53,** an inner-side reinforcing member **54,** and a partition member **55** are arranged inside a side sill **50.** A side sill outer **51** and a side sill inner **52** of the side sill **50** and the partition member **55** are joined together by three-sheet spot welding at two points **3SW** of upper-and-lower flange portions. The other portions are two-sheet spot-welded at the two points **2SW.** That is, while the outer-side reinforcing member **53** is welded to a vertical wall portion **51a** of the side sill outer **51,** the inner-side reinforcing member **54** is welded to the partition member **55,** not to the side sill inner **52.**

According to the structure having the brace portions **17a, 17b** shown in FIG. **8****,** when the collision load is applied, the angle change of the ridgelines **11f, 11g** can be suppressed by the brace portions **17a, 17b.** Therefore, in the verification test that a torsional moment around the axis X extending in the longitudinal direction X was applied to the test model shown in FIG. **8****,** the torsional rigidity of about 110,000N/rad was measured, and the mass efficiency was about 40,000N/rad·kg.

Meanwhile, since the conventional structure shown in FIG. **9** does not have any brace portion, the angle change of the ridgelines of the side sill **50** cannot be suppressed. Therefore, in the verification test that the torsional moment around the axis X was applied to the conventional structure shown in FIG. **9****,** the torsional rigidity measured was just about 92,000N/rad, and the mass efficiency was about 30,800N/rad·kg. Thus, the test showed that the mass efficiency of the conventional structure was only about 77% of that of the structure having the brace portions **17a, 17b** shown in FIG. **8****.** Accordingly, it has been found from the test results that the brace portions **17a, 17b** contribute to the improvement of the torsional rigidity greatly.

### (Features of Present Embodiment)

(1)
   According to the lower vehicle-body structure of the vehicle of the present embodiment, the outer-side reinforcing member **13** and the inner-side reinforcing member **14** are provided inside the side sill **2.** Further, the outer-side reinforcing member **13** comprises the engaging portion **18** which is configured to engage with the engaged portion **15** of the inner-side reinforcing member **14** in the vehicle side collision, i.e., when the collision load applied from the vehicle side is inputted to the side sill **2,** and the brace portions **17a, 17b.** The brace portion **17a** interconnects the outer vertical-wall portion **11a** and the outer top-plate portion **11b,** straddling the ridgeline **11f** of the side sill **2,** and the brace portion **17b** interconnects the outer vertical-wall portion **11a** and the outer bottom-plate portion **11c,** straddling the ridgeline **11g** of the side sill **2.**

Herein, either one of the brace portions **17a, 17b** may be omitted.

According to the present embodiment, since the angle changes of the ridgelines **11f, 11g** (e.g., the change of the angle of the corner portions of the closed-cross section C such that the angle is opened or closed) are suppressed by the brace portions **17a, 17b,** the engaging portion **18** of the outer-side reinforcing member **13** is suppressed from being shifted in the vertical direction Z in the vehicle side collision. Accordingly, the engaging portion **18** of the outer-side reinforcing member **13** engages with the engaged portion **15** of the inner-side reinforcing member **14** more stably, so that the outer-side reinforcing member **13** and the inner-side reinforcing member **14** can be sufficiently compressed and deformed. Thereby, the energy-absorption quantity can be improved properly.

Accordingly, in a case where the structure of the present embodiment is applied to an electric automobile having battery cells provided below a vehicle floor, the energy absorption of the side sill **2** is so improved that a cell pack can be protected properly.

Further, since the angle change of the ridgelines **11f, 11g** can be suppressed by the brace portions **17a, 17b** in the normal vehicle traveling, the vehicle-body rigidity (particularly, the torsional rigidity) can be improved as well. Thereby, the torsional deformation of the side sill **2** can be suppressed.

Moreover, even if the outer-side reinforcing member **13** and the inner-side reinforcing member **14** are provided inside the side sill **2** in a state where they contact each other inside the closed-cross section **C,** since the slight angle change of the side sill **2** is not generated in the normal vehicle traveling and also the vertical move (shift) of the outer-side reinforcing member **13** according to this change does not occur. Consequently, the noise is not caused improperly.

(2)
In the lower vehicle-body structure of the vehicle of the present embodiment, one of the engaging portion **18** and the engaged portion **15** has the convex-shaped cross section and extends in the longitudinal direction X and the other has the concave-shaped cross section, which corresponds to the convex-shaped cross section, and extends in the longitudinal direction X.

According to this structure, the engaging portion **18** and the engaged portion **15** can stably engage with each other through their concave-and-convex portions (i.e., a groove and a protrusion) which extend in the longitudinal direction X, respectively. Further, by roll-forming the metal plate, either one of the engaging portion **18** and the engaged portion **15** can be formed in a shape where it has the convex-shaped cross section and continuously extends in the longitudinal direction X and the other one can be formed in a shape where it has the concave-shaped cross section and continuously extends in the longitudinal direction X. Thus, their stable engagement can be easily attained.

(3)
In the lower vehicle-body structure of the vehicle of the present embodiment, the outer-side reinforcing member **13** includes the first portion **16** which has the engaging portion **18** and the second portion **17** which is connected to the first portion **16** and has the brace portions **17a, 17b.**

According to this structure, the first portion **16** with the engaging portion **18** and the second portion **17** with the brace portions **17a, 17b** can be separately formed in their respective shapes having their desired and continuous cross sections through the respective roll-forming of the metal plates. Then, by connecting the first portion **16** and the second portion **17,** the outer-side reinforcing member **13** provided with the engaging portion **18** and the brace portions **17a, 17b** can be easily manufactured.

(4)
In the lower vehicle-body structure of the vehicle of the present embodiment, the first portion **16** is fixed to the side sill **2** via the second portion **17.**

According to this structure, the collision load inputted to the side sill **2** in the vehicle side collision can be securely transmitted to the first portion **16** via the second portion **17** at the outer-side reinforcing member **13.** Thereby, the load transmission from the brace portions **17a, 17b** of the second portion **17** to the engaging portion **18** of the first portion **16** can be attained smoothly.

(5)
In the lower vehicle-body structure of the vehicle of the present embodiment, the first portion **16** comprises the upper wall portion **16b** which connects the tip end face **16a** of the engaging portion **18** to the brace portions **17a, 17b** of the second portion **17** and the lower wall portion **16c** which is located below the upper wall portion **16b.** The upper wall portion **16b** and the lower wall portion **16c** have the step portions **16f, 16g** (i.e., beads or recess-and-convex portions extending in the longitudinal direction X) as the deformation promotion to promote deformation partially in the vehicle side collision.

According to this structure, in the vehicle side collision, the engaging portion **18** of the first portion **16** of the outer-side reinforcing member **13** engages with the engaged portion **15** of the inner-side reinforcing member **14** and also the partial deformation of the first portion **16** of the outer-side reinforcing member **13** is promoted at each of the step portions **16f, 16g** as the deformation-promotion portions of the upper wall portion **16b** and the lower wall portion **16c.** Consequently, the energy-absorption quantity of the outer-side reinforcing member **13** can be further improved.

(6)
In the lower vehicle-body structure of the vehicle of the present embodiment, the first portion **16** is made of the plate member. The deformation promotion portion is constituted by the plural step portions **16f, 16g** which are formed by partially bending the plate member.

According to this structure, the deformation promotion portion can be formed at the upper wall portion **16b** and the lower wall portion **16c** of the first portion **16** of the outer-side reinforcing member **13** by a simple structure (in other words, by a simple shape changing) by constituting the deformation promotion portion by the plural step portions **16f, 16g.** In the vehicle side collision, the plural step portions **16f, 16g** are deformed in a folding manner (so-called bellows manner), so that the first portion **16** of the outer-side reinforcing member **13** can be deformed easily. Moreover, the energy-absorption quantity of the outer-side reinforcing member **13** can be easily set and controlled by a shape of the step portion of the first portion **16.**

(7)
In the lower vehicle-body structure of the vehicle of the present embodiment, the above-described upper brace portion **17a** and the above-described lower brace portion **17b** are both provided.

According to this structure, the further improvement of the energy-absorption quantity of the side sill **2** in the vehicle side collision and the further improvement of the rigidity of the side sill **2** in the normal vehicle traveling can be attained.

(8)
In the lower vehicle-body structure of the vehicle of the present embodiment, the outer vertical-wall portion **11a** has the bead **11h** extending in the longitudinal direction X (the recess portion which is recessed toward the vehicle inside Y2 in FIG. **3****),** and the brace portions **17a, 17b** are fixed to the bead **11h.**

According to this structure, since the outer vertical-wall portion **11a** of the side sill **2** has the bead **11h** extending in the longitudinal direction X, the rigidity of the outer vertical-wall portion **11a** (particularly, the bending rigidity in the vehicle width direction) can be improved. Further, since the brace portions **17a, 17b** are fixed to the bead **11h** which provides the high rigidity, the collision load of the vehicle side collision can be smoothly transmitted to the brace portions **17a, 17b** of the outer-side reinforcing member **13** from the outer vertical-wall portion **11a** of the side sill outer **11,** so that the energy-absorption quantity of the outer-side reinforcing member **13** can be further improved.

(9)
In the lower vehicle-body structure of the vehicle of the present embodiment, the inner-side reinforcing member **14** and the outer-side reinforcing member **13** are made by roll-forming the metal plate.

According to this structure, the desired cross-section shape can be made easily and with low costs. Further, since the both reinforcing members **14, 13** are formed continuously, this structure is applicable to any vehicles with the different vehicle's entire length, i.e., applicable to any vehicle's body sizes.

Further, since the both reinforcing members **14, 13** made by the roll-forming reinforce the side sill **2** over a long range in the longitudinal direction X, even if an obstacle hits against any part, in the longitudinal direction X, of the side sill 2, the superior energy-absorption quantity can be obtained. Thereby, the battery of the battery-electric automobile can be securely protected.

(10)
In the lower vehicle-body structure of the vehicle of the present embodiment, this structure further comprises the four cross members **6 - 9** (the first cross member **6,** the front-side middle cross member **7,** the second cross member **8,** and the third cross member **9)** extending in the vehicle width direction Y, wherein these cross members are connected to the inner vertical-wall portion **12a** of the side sill inner **12** in a range which includes an overlapping portion of the inner-side reinforcing member **14** and the side sill **2** in the vertical direction Z, like the front-side middle cross member **7** shown in FIG. **3****.**

According to this structure, the collision load can be effectively received in the vehicle side collision by the cross members **6 - 9** which support the overlapping portion of the inner-side reinforcing member **14** and the side sill **2** from the vehicle inside. Thereby, the energy-absorption quantity of the side sill 2 and the inner-side reinforcing member **14** can be further improved. Accordingly, in the electric automobile with the battery back provided to extend below the vehicle floor, the battery pack can be protected securely.

### (Modified Examples)

In the above-described embodiment, the step portions **16f, 16g** formed by bending the plate, i.e., the bead or the concave-and-convex portions extending in the longitudinal direction X, are exemplified as the deformation promotion portion provided at the upper wall portions **16b, 16c** of the first portion **16** of the outer-side reinforcing member **13.** However, the present invention is not limited to this, and any shape or type of deformation promotion portion is applicable to the present invention as long as the deformation of the upper wall portion **16b** and the lower wall portion **16c** can be promoted. For example, a notch may be formed at the upper wall portion **16b** and the lower wall portion **16c,** or the thickness of these may be reduced partially.

The present invention is applicable to any vehicle with the side sill. In particular, in a case where the present invention is applied to the electric automobile with the battery pack provided below the vehicle floor, the energy absorption of the side sill is so improved that the battery pack can be protected properly.

## Claims

1. A lower vehicle-body structure of a vehicle, comprising:
a side sill (2) having a closed-cross section and extending in a longitudinal direction (X) of the vehicle;
an outer-side reinforcing member (13) arranged inside the side sill (2) and extending in the longitudinal direction (X); and
an inner-side reinforcing member (14) arranged on a vehicle inside of the outer-side reinforcing member (13) inside the side sill (2) and extending in the longitudinal direction (X),
wherein said side sill (2) comprises an outer vertical-wall portion (11a), an inner vertical-wall portion (12a) positioned on the vehicle inside of said outer vertical-wall portion (11a), an outer top-plate portion (11b) connected to an upper end of said outer vertical-wall portion (11a), and an outer bottom-plate portion (11c) connected to a lower end of outer vertical-wall portion (11a),
said outer vertical-wall portion (11a), said inner vertical-wall portion (12a), said outer top-plate portion (11b) and said outer bottom-plate portion (11c) form together at least part of said closed-cross section of the side sill (2),
an upper ridgeline (11f) is formed between said outer vertical-wall portion (11a) and said outer top-plate portion (11b) and a lower ridgeline (11g) is formed between said outer vertical-wall portion (11a) and said outer bottom-plate portion (11c),
said inner-side reinforcing member (14) comprises an engaged portion (15) which is fixed to said inner vertical-wall portion (12a) and configured to engage with said outer-side reinforcing member (13) when an collision load applied from a vehicle side is inputted to the side sill (2), and
said outer-side reinforcing member (13) comprises an engaging portion (18) which is configured to engage with said engaged portion of the inner-side reinforcing member (14) when the collision load applied from the vehicle side is inputted to the side sill (2) and at least one of an upper brace portion (17a) which interconnects said outer vertical-wall portion (11a) and said outer top-plate portion (11b), straddling said upper ridgeline (11f), and a lower brace portion (17b) which interconnects said outer vertical-wall portion (11a) and said outer bottom-plate portion (11c), straddling said lower ridgeline (11g).

2. The lower vehicle-body structure of the vehicle of claim 1, wherein one of said engaging portion (18) and said engaged portion (15) has a convex-shaped cross section and extends in the longitudinal direction (X) and the other has a concave-shaped cross section, which corresponds to said convex-shaped cross section, and extends in the longitudinal direction (X).

3. The lower vehicle-body structure of the vehicle of claim 1 or 2, wherein said outer-side reinforcing member (13) includes a first portion (16) which has said engaging portion and a second portion (17) which is connected to said first portion (16) and has said brace portion.

4. The lower vehicle-body structure of the vehicle of claim 3, wherein said first portion (16) is fixed to said side sill (2) via said second portion (17).

5. The lower vehicle-body structure of the vehicle of claim 3 or 4, wherein said first portion (16) comprises an upper wall portion which connects said engaging portion to said second portion (17) and a lower wall portion which is located below said upper wall portion and connects said engaging portion (18) to said second portion (17), and each of said upper wall portion and said lower wall portion has a deformation-promotion portion (16f, 16g) to promote deformation partially in a vehicle side collision.

6. The lower vehicle-body structure of the vehicle of claim 5, wherein said first portion (16) is made of a plate member, and said deformation promotion portion is constituted by plural step portions (16f, 16g) which are formed by partially bending said plate member.

7. The lower vehicle-body structure of the vehicle of anyone of the preceding claims, wherein said upper brace portion (17a) and said lower brace portion (17b) are both provided.

8. The lower vehicle-body structure of the vehicle of anyone of the preceding claims, wherein said outer vertical-wall portion (11a) has a bead (11h) extending in the longitudinal direction (X), and said upper and/or lower brace portion (17a, 17b) is fixed to said bead (11h).

9. The lower vehicle-body structure of the vehicle of anyone of the preceding claims, wherein said inner-side reinforcing member (14) and said outer-side reinforcing member (13) are each a roll-formed metal plate.

10. The lower vehicle-body structure of the vehicle of anyone of the preceding claims, further comprising a cross member (6, 7, 8, 9) extending in a vehicle width direction, wherein said cross member (6, 7, 8, 9) is connected to said inner vertical-wall portion (12a) of the side sill (2) in a range which includes an overlapping portion of said inner-side reinforcing member (14) and said side sill (2) in a vertical direction.

11. The lower vehicle-body structure of the vehicle of anyone of the preceding claims, wherein said engaged portion (15) of the inner-side reinforcing member (14) and/or the engaging portion (18) of the outer-side reinforcing member (13) is positioned offset from a virtual vertical plane going through a center of the side sill (2) along said longitudinal direction (X) towards said inner vertical wall portion (12a) and/or offset from a virtual vertical plane extending along said upper ridgeline (11f) and/or along said lower ridgeline (11e) towards said inner vertical wall portion (12a).

12. The lower vehicle-body structure of the vehicle of anyone of the preceding claims, wherein at least one of the inner-side reinforcing member (14) and the outer-side reinforcing member (13) is provided with a plurality of step portions (16f, 16g) configured to deform in a folding manner or bellows manner upon a side impact onto the side sill (2) causing the engaged portion (15) of the inner-side reinforcing member (14) to engage with the engaging portion (18) of the outer-side reinforcing member (13).

13. A vehicle, comprising a lower vehicle body structure as defined in anyone of the preceding claims.
